# EUROPEAN PATENT APPLICATION

(11) **EP 1 380 555 A1**
(43) Date of publication of application: **14.01.2004**
(21) Application number: 02077796.7
(22) Date of filing: 10.07.2002
(51) Int. Cl.: C05F 3/00, C02F 3/30, C02F 1/04

(54) **Method and device for processing manure**

(30) Priority: 10.07.2002 BE 200100474
(71) Applicant: Trevi, Naamloze Vennootschap, 8930 Menen (BE)
(72) Inventor: Deboosere, Stefaan, 9000 Gent (BE)
(74) Representative: Donné, Eddy

(57) **Abstract**

The invention relates to a method for processing manure, which manure comprises a thick substance, whereby this thick substance is separated as a thick fraction (4) from a thin fraction (3). The thin fraction (3) is aerobically biologically purified, whereby this purification comprises an aerobic nitrification step, after which the aerobically treated thin fraction is concentrated by evaporation.

## Description

This invention relates to a method for processing manure, which manure comprises a thick substance, whereby this thick substance is separated as a thick fraction from a thin fraction.

More particularly, this method relates to the processing of mixed manure and liquid manure.

In particular in pig-breeding farms, large quantities of liquid manure are produced. Due to rather strict reglementations, only a limited quantity thereof can be used for manuring the fields, such that a large surplus of manure is created which must be processed.

Therefore, this manure must undergo a treatment.

Manure-processing installations are known whereby in a first phase, the manure is fermented, i.e. anaerobically treated. Hereby, the organic fraction of the manure largely is decomposed, whereas the nutrients, nitrogen and phosphor are not removed. During this fermentation, biogas is formed, with which, after desulphurization, for example, electricity can be made. Thus, a considerable part of the organic material in the manure is removed in the form of CO₂ and CH₄.

Only after fermentation, the fermented product is divided into a thin and a thick fraction. The thin fraction, which comprises a considerable part of the nutrients from the manure, then is acidified up to a pH value of 5 to 6 in order to avoid the volatilization of ammonium during concentration by evaporation. This acidified liquid then is concentrated by evaporation, whereby condensate and concentrate are formed. Of those, the condensate is drained, and the concentrate, which comprises the ammoniacal nitrogen, is added to the thick fraction and mostly is thermically dried.

In said method with an anaerobic fermentation, the thin fraction is heavily laden with nitrogen and COD. Considerable costs for chemicals will be required in order to lower the pH value of the thin fraction in order to avoid the evaporation and transition of NH₃ into the condensate. In practice, one will acidify, for example, up to a pH value of 5 to 6, and this, for example, by means of sulphuric acid.

In order to fulfil the discharge standard for nitrogen (to wit, maximum 15 mg/l Nₜₒₜ) in the condensate, before evaporation a further acidification will be necessary. At these low pH values, however, volatile organic fatty acids start to volatilize, which results in increased COD values in the condensate.

In practice, it was found that the condensate must be purified additionally in order to fulfil the discharge standards.

Due to the absence of hardness and the very limited buffering in the condensate, a biological purification of this condensate, however, is difficult. So, there is the difficult sedimentation of the biological slurry as a result of the limited hardness of the water, whereas also a biological deceleration can occur as a result of the strong pH fluctuations when either nitrification (acidifying) or denitrification (increasing the pH value) prevails. Apart therefrom, a considerable quantity of additional carbon source will be necessary in order to have the denitrification run smoothly, if there is no acidification up to pH values below 5 before evaporating.

Therefore, mostly other purification techniques than biological purification are used, such as membrane techniques (ultrafiltration and inverted osmosis), for rendering the condensate dischargeable. In order to fulfil, amongst others, the discharge standard for nitrogen, mostly multi-stage inverted osmosis installations are required, which is relatively expensive.

Pig's manure comprises a considerable amount of sulphur. The SO₄ content in pig's manure varies between 0.17 and 0.67 kg/ton. After fermentation, this sulphur substantially is present in the reduced form (H₂S). Due to the high volatility of this component, already during the separation and acidification of the fermented mass, a part will evaporate, with hindrances caused by obnoxious odours as a consequence. Hydrogen sulphide will also volatilize during the concentration by evaporation and subsequently will partially dissolve in the condensate and partially evaporate. Amongst others, the "dissolution" in the condensate depends on the pH value and will work better at higher pH values.

After fermentation, a suctioning system must be provided at a number of locations (amongst others, at the separator and the acidification point), which will increase the cost price of the applied installation. Moreover, during the concentration by evaporation it will be impossible to avoid that a part of the vapour containing H₂S and NH₃ is set free and must be treated.

During this known method, organic material is removed from the thick fraction and the nutrients are not processed, but, for example, concentrated in the thick dried fraction.

The invention aims at a method for processing manure which does not have the aforementioned disadvantages, is relatively simple and inexpensive and whereby better end products are obtained than with said known method.

To this aim, according to the invention the thin fraction is aerobically biologically purified instead of being fermented, whereby this purification comprises an aerobic nitrification step, after which the aerobically treated thin fraction is concentrated by evaporation.

The advantage thereof is that a part of the nitrogen of both the thick and thin fractions is processed, and that the organic material and, thus, the entire organic soil-improving value and caloric contents of the thick fraction are maintained. Also, the method according to the invention is more interesting in respect to cost price and odour emission. After concentration, the condensed vapours can be discharged or used for certain applications.

In this aerobic biological purification, the nitrogen compounds are aerobically nitrified. This step can be followed by a denitrification step.

In a preferred form of embodiment, the thick fraction is dried, preferably by means of so-called condensation drying.

The condensate, formed by condensation drying, can be purified biologically, preferably together with the thin fraction.

In another preferred form of embodiment, the concentrate, which is formed during the concentration by evaporation, is dried.

If the thick fraction is dried, this concentrate can be dried together with this thick fraction.

In still another form of embodiment, the thin fraction, after separation, is buffered temporarily before being purified biologically.

The invention also relates to a device which is particularly suitable for applying the method according to any of the aforementioned forms of embodiment.

The invention thus relates to a device for processing manure, which comprises a separation device for separating the manure into a thick and a thin fraction, with as a characteristic that it comprises, connecting to the outlet for the thin fraction of the separation device, successively an aerobic biological purification device and a device for concentration by evaporation for the purified thin fraction.

Preferably, the device for processing manure comprises a drying device for drying the thick fraction, which latter device is connected to the outlet for the thick fraction of the separation device.

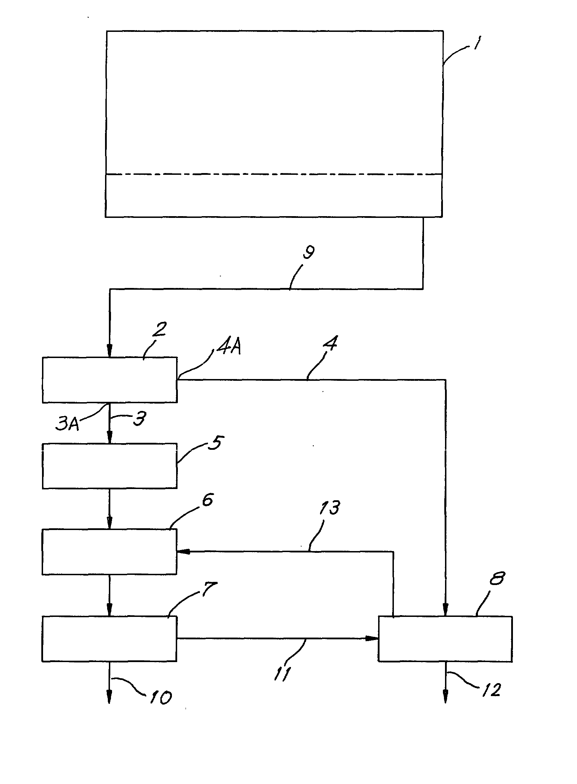

With the intention of better showing the characteristics of the invention, hereafter, as an example without any limitative character, a preferred form of embodiment of a method and a device for processing manure according to the invention is described, with reference to the accompanying drawing, wherein the sole figure represents a block diagram of a device for applying the method according to the invention.

As represented in the figure, the device for processing manure, originating from a manure stock 1, comprises a mechanical separation device 2 where the manure is separated into a thin fraction 3 and a thick fraction 4 with, for example, a dry matter content of approximately 25 to 35 %.

The separation device 2 can be a screw press or a centrifuge, whether with an addition of a dose of polymers or not, and the volume distribution is, for example, 80 volume % of thin fraction 3 for 20 volume % of thick fraction 4.

Connecting to the outlet 3A for the thin fraction 3 of the separation device 2, the processing device successively comprises a buffering and sedimentation tank 5, an aerobic biological purification device 6, and a device 7 for concentration by evaporation.

This purification device 6 may be of a known type and may consist of an aerobic nitrification basin, in which the nitrogen, present in the thin fraction 3, first is ammonified and subsequently is nitrified in two steps, by means of micro-organisms, for example, successively by Nitrosomonas and by Nitrobacter species in the presence of oxygen, which is supplied through an aeration system, in particular fine-bubbled plate aerators, and a denitrification basin connected thereto, in which, by various heterotrophic micro-organisms in the absence of oxygen and in the presence of sufficient source of carbon, the nitrite and nitrate nitrogen is transformed into harmless nitrogen gas, and in which the biological slurry is kept in suspension by means of a mixer. As a source of carbon for the denitrification, preferably the carbon of the manure itself is used. As an alternative, an additional source of carbon, such as, for example, methanol or certain carbon-rich waste flows from, amongst others, the food industry, can be added.

The device 7 for concentration by evaporation comprises an evaporation part which can be of a type with plates as well as with tubes and can be heated electrically as well as by a warm fluid, and a condenser part where the formed vapours are condensated and which, for example, comprises a heat exchanger in which the vapours are cooled by the incoming purified thin fraction.

A drying device 8 connects to the outlet 4A for the thick fraction of the separation device 2.

The drying device 8 preferably is a so-called condensation drying device or cold drying device, i.e. a device in which the thick fraction 4 is dried by means of dry air which is dried by first being cooled and, after having separated the condensated moisture or condensate, being heated.

Liquid pig's manure 9, which comprises a thick substance, originating from the manure stock 1, is separated into the thin fraction 3 and the thick fraction 4 in the mechanical separation device 2.

The thin fraction 3 is stocked during a period of time, for example, a week, in the buffering and sedimentation tank 5, after which this thin fraction 3 is purified in the biological purification device 6, where it thus is aerobically nitrified and subsequently denitrified.

Subsequently, this purified thin fraction 3 is concentrated by evaporation in the concentration device 7.

The vapour created thereby is condensated to a condensate or effluent 10 which is discharged.

The obtained condensate is of such a good quality that discharging is not the only solution, but that also other applications can be found, and thus, in variants, the water is not discharged, but applied, for example, for irrigation, in the textile industry, as cleaning water for various applications, or in still other applications.

The concentrate 11 from the device 7 for concentration by evaporation is added to the thick fraction 4.

This thick fraction 4, together with the concentrate 11, is dried in the drying device 8, whereby a dried end product 12 is formed.

If the drying, as represented, takes place in a so-called cold drying device or condensation drying device, the condensate 13 is fed back to the purification device 6.

During this method, more than 90% and, thus, the major part of the nitrogen from the thin fraction 3 can be processed, whereas also an important part of the ammoniacal nitrogen from the thick fraction 4 is processed.

The organic material in the thick fraction 4 is entirely retained. As a result, the entire organic soil-improving value and caloric contents of this thick fraction 4 are maintained.

With methods with an aerobic fermentation, this caloric value is obtained as biogas, however, this is related to a relatively expensive installation with a fermentation tank and another infrastructure.

Moreover, when applying condensation drying of the thick fraction 4, as described hereabove, the ammoniacal nitrogen from the thick fraction 4 is transported off by means of the condensate 13 and subsequently is entirely transformed to N₂ in the biological purification device 6.

When thermically drying or composting the thick fraction 4, however, an important part of the ammoniacal nitrogen will volatilize, and a technique installed downstream will be required for reducing the emission of NH₃ and the odour.

In the biological purification, the nitrogen first is extensively purified, before concentration by evaporation takes place. In practice, it is obtained that the ammonium content in the effluent 10 is considerably lower than 50 ppm. Most of the residual nitrogen in the effluent 10 is present as organic nitrogen and nitrate nitrogen, which are non-volatile components.

Also the COD, and then in particular the biologically degradable fraction, such as organic fatty acids, will be extensively (> 90%) removed. Consequently, an acidification before the concentration by evaporation is not necessary, and the discharge standard of 15 ppm Nₜₒₜ and other valid standards in the condensate 10 can be achieved.

As an additional safeguard for NH₃-volatilization during the concentration by evaporation, also the denitrification can be decelerated in the biological purification, as a result of which the pH value of the liquid to be concentrated by evaporation is reduced. Moreover, it is probable that the quality requirements for the device 7 for concentration by evaporation, amongst others, in regard to the choice of material, are considerably lower than for the known methods with fermentation.

An additional advantage of reducing the denitrification can be a nitrate-rich concentrate after the device 7 for concentration by evaporation, as a result of which the residual product can have a higher Nₜₒₜ concentration.

Contrary to methods with fermentation, almost no dosage of a source of carbon is required in order to obtain a good denitrification, in consideration of the fact that the COD from the manure itself can be applied.

After the biological purification according to the invention, the sulphur is present in the oxidated and non-volatile form (SO₄), such that, during concentration, it remains in the concentrate and does not cause further problems.

When concentrating the biologically purified thin fraction 3 by evaporation, no gasses containing H₂S or NH₃ are released. Only the buffering and sedimentation tank 5 must be covered and possibly must be suctioned off and treated in a limited manner by means of a topped technique.

Also during the drying of the thick fraction, a minimum odour emission will occur during condensation drying, this contrary to the usual drying systems at increased temperature.

As no fermentation tank or biogas desulphurization is necessary, the device 7 for concentration by evaporation can be relatively inexpensive, few chemicals are necessary and little or no treatments are necessary for preventing obnoxious odours, the invention according to the invention is relatively inexpensive.

The invention is in no way limited to the form of embodiment described heretofore and represented in the figures, however, such method for processing manure and the device used therewith can be realized in various variants, without leaving the scope of the invention.

## Claims

1. Method for processing manure, which manure comprises a thick substance, whereby this thick substance is separated as a thick fraction (4) from a thin fraction (3), **characterized in that** the thin fraction (3) is aerobically biologically purified, whereby this purification comprises an aerobic nitrification step, after which the aerobically treated thin fraction is concentrated by evaporation.

2. Method according to claim 1, **characterized in that**, during the biological purification, a denitrification is performed after the aerobic nitrification.

3. Method according to claim 1 or 2, **characterized in that** the vapours obtained by the concentration by evaporation are condensed and that the condensate (10) is discharged or used.

4. Method according to any of the preceding claims, **characterized in that** the thick fraction (4) is dried.

5. Method according to claim 4, **characterized in that** the thick fraction (4) is dried by means of a so-called condensation drying.

6. Method according to claim 5, **characterized in that** the condensate (13) formed by the condensation drying is purified biologically.

7. Method according to claim 6, **characterized in that** the condensate (13) is purified biologically by means of an aerobic nitrification step.

8. Method according to claim 7, **characterized in that** the condensate (13), after the nitrification step, is subjected to a biological denitrification step.

9. Method according to any of the claims 6 to 8, **characterized in that** the formed condensate (13) is purified biologically together with the thin fraction (3).

10. Method according to any of the preceding claims, **characterized in that** the concentrate (11) formed during the concentration by evaporation, is dried.

11. Method according to claims 4 and 10, **characterized in that** the formed concentrate (11) is dried together with the thick fraction (4).

12. Method according to any of the preceding claims, **characterized in** tht the thin fraction (4), after separation, temporarily is buffered before being purified biologically.

13. Device for processing manure according to the method in accordance with any of the preceding claims, which comprises a separation device for separating the manure into a thick and a thin fraction, **characterized in that** it comprises, connecting to the outlet (3A) for the thin fraction (3) of the separation device, successively an aerobic biological purification device (6) and a device (7) for concentration by evaporation for the purified thin fraction.

14. Device according to claim 13, **characterized in that** the purification device (6) comprises a fine-bubbled plate aerator.

15. Device according to claim 13 or 14, **characterized in that** it comprises a drying device (8) which connects to the outlet (4A) for the thick fraction (4) of the separation device (2), for drying this thick fraction (4).

16. Device according to claim 15, **characterized in that** said drying device (8) is a condensation drying device.
